# EUROPEAN PATENT APPLICATION

(11) **EP 4 346 065 A1**
(43) Date of publication of application: **03.04.2024**
(21) Application number: 23162631.8
(22) Date of filing: 17.03.2023
(51) Int. Cl.: H02J 50/00, H02J 50/90

(54) **ELECTROMAGNET ARRANGEMENT FOR WIRELESS POWER TRANSFER**

(30) Priority: 28.09.2022 SE 2251117
(71) Applicant: ElectDis AB, 211 21 Malmö (SE)
(72) Inventor: Swaans, Laurens, 212 32 Malmö (SE); Hållsten, Eneas, 211 18 Malmö (SE)
(74) Representative: Ström & Gulliksson AB

(57) **Abstract**

A device (10; 20) for wireless power transfer between the device (10; 20) and a second device (20; 10) for wireless power transfer is provided. The device (10; 20) comprises a wireless power transfer coil (12; 22) adapted to transfer power between the wireless power transfer coil (12; 22) and a second wireless power transfer coil (22; 12) of the second device (20; 10). The device (10; 20) further comprises an electromagnet arrangement (14; 24) arranged at the wireless power transfer coil (12; 22). The electromagnet arrangement (14; 24) is configured for controllable magnetic interaction (19) between the device (10; 20) and the second device (20; 10).

## Description

### TECHNICAL FIELD

The present invention generally relates to the field of wireless power transfer, and more specifically to a device for wireless power transfer between the device and a second device for wireless power transfer. The present invention also relates to a system and method for testing wireless power transfer between a device for wireless power transfer and a testing device for wireless power transfer.

### BACKGROUND

Wireless power transfer is becoming increasingly popular, for instance for wireless battery charging of mobile devices being mobile terminals, tablet computers, laptop computers, cameras, audio players, rechargeable toothbrushes, wireless headsets, as well as various other consumer products and appliances.

The Wireless Power Consortium (WPC) has developed a wireless power transfer standard known as Qi. Other known wireless power transfer approaches include Alliance for Wireless Power, and Power Matters Alliance. Apple Inc. has also developed a wireless power transfer standard called MagSafe. The MagSafe standard utilizes inductive power transfer on similar principles as for example the Qi standard, with some modifications and deviations. One distinctive difference between the Qi and MagSafe standards is that MagSafe compatible devices make use of a ring of magnets (in both power transmitter and power receiver devices) for magnetically attracting the devices towards one another. The ring of magnets ensures a good alignment between the interacting devices during power transfer by generation of an attractive force between the two devices such that they are pulled towards one another. Benefits of an improved alignment involve an improved user experience, a higher charging efficiency, and an easier implementation of safety-related features, to name a few advantages.

The magnetic functionality of MagSafe comprises a ring of magnets having a set of permanent magnet segments made of neodymium that are distributed around a wireless power coil of the device. A MagSafe receiver device (e.g. iPhone) has 18 segments and a MagSafe transmitter device (e.g. charging pad) has 16 segments. Other solutions may have other similar type of arrangements. The neodymium magnets have an electrical conductivity that is enabled by an alternating electromagnetic field as used in wireless power transfer. The neodymium magnets will therefore absorb electromagnetic power due to eddy currents in the electrically conducting parts (since neodymium is a metal). The magnitude and severity of power losses depend on relative positioning of the respective coils of the power receiver and transmitter devices.

To solve power losses caused by absorbed eddy currents in wireless power transfer, wireless power transfer systems typically incorporate Foreign Object Detection (FOD) means. FOD is a safety feature that prevents unintentional heating of metallic objects in the vicinity of the electromagnetic field. This feature is based on the concept of power loss accounting. Power loss accounting means that the power receiver coil reports how much power that is being received from the electromagnetic field and that the power transmitter device measures how much power it is transmitting into the electromagnetic field. The difference between the two values is considered as power losses into surrounding objects. If these power losses are too high (for instance in the order of several hundred mW) the power transmitter device will throttle the power or even shut down entirely for preventing dangerous situations.

In a wireless charging system where both the receiver and transmitter devices have a respective ring of magnets, these magnets will act as Foreign Objects and dissipate energy from the electromagnetic field depending on the relative positioning of the devices. When the magnets are positioned over the transmitter/receiver coil windings, the energy losses will be higher compared to when the magnets "surround" the coils without overlapping them. The number of possible permutations of power receiver devices (such as mobile phones), power transmitter devices (such as chargers or docking stations), or vice versa, and their respecting operating conditions (battery charge status, relative positioning, protective sleeve presence, FOD means, etc.) makes it very difficult to predict electromagnetic dynamics under all circumstances.

In addition, for testing purposes there is a strong desire to verify product performance at the boundaries of expected operating conditions. One of those operating conditions is the positioning accuracy (or the alignment) between the two devices. The presence of a magnet ring makes it difficult to use any deliberate offset in the positioning as one could expect when there is significant friction between the two devices, for instance because of device surface finishings in materials (such as e.g. leather or rubber).

In a 1-to-1 wireless power transfer system having two devices with a respective power receiver/transmitter unit, advantages are clearly realized in terms of control of electromagnetic dynamics when both of the devices are equipped with the magnetic ring. For instance, the presence of the magnets will help in the aligning of a MagSafe power receiver coil (e.g. in an iPhone 13) with a MagSafe power transmitter coil (e.g. in an iPhone 13 wireless charger). In this scenario, the entire electromagnetic system is well controlled and behaves predictably. In addition, the Qi standard has been proven successful and popular in wireless power transfer systems not having any magnets at all.

However, there are still problems in the case where a device having a magnetic ring is combined with a device not having a corresponding magnetic ring. Potential future inclusion of the magnetic functionality of the MagSafe standard into the Qi standard may therefore introduce a concept of interoperability between a MagSafe power receiver coil (for example the iPhone 13) and a non-MagSafe transmitter coil (for example a charging dock in a BMW car), or vice versa (a non-MagSafe power receiver coil charging on a MagSafe power transmitter coil).

The present inventors have identified numerous problems in this regard. The MagSafe standard, as well as other similar magnetic alignment means for wireless charging devices known in the art, are associated with interoperability issues (e.g. between one device using Qi and another device using MagSafe), power losses, safety and regulatory issues, insufficient control and inadequate testing capabilities.

In view of the observations above, the present inventors have identified a solution that improves on the prior art.

### SUMMARY

The present inventors have realized the disadvantages as discussed above in combining different wireless charging power functionalities that are incompatible. On one hand, the combinations still require meeting all requirements in terms of interoperability and safety/regulatory aspects, and on the other hand the benefits of the magnetic alignment functionality is desired. The solution provided herein solves both the compatibility problem and the inclusion of the beneficial magnetic properties in a cheap, efficient and dynamic manner.

An object of the present invention is therefore to provide a solution to, or at least a mitigation of, one or more of the problems or drawbacks identified in the background section above.

In a first aspect of the invention, a device for wireless power transfer between the device and a second device for wireless power transfer is provided. The device comprises a wireless power transfer coil adapted to transfer power between the wireless power transfer coil and a second wireless power transfer coil of the second device; and an electromagnet arrangement arranged at the wireless power transfer coil, wherein the electromagnet arrangement is configured for controllable magnetic interaction between the device and the second device.

Hence, the invention generally involves employing an electromagnet arrangement instead of the ring of magnets as suggested by the prior art solutions. The permanent (e.g. neodymium) magnets are thus replaced by the electromagnet arrangement. In addition to solving the disadvantageous aspects of the prior art, as discussed above, the electromagnet arrangement involves a plurality of further advantageous technical implications, advantages which are further realized by the various embodiments of the invention.

In one or more embodiments, the electromagnet arrangement is arranged at a periphery of the wireless power transfer coil.

In one or more embodiments, the electromagnet arrangement is generally ring-shaped or, alternatively, shaped as a rectangle or other polygon.

In one or more embodiments, the electromagnet arrangement is arranged in the same plane as the wireless power transfer coil, or alternatively co-planar therewith, with the electromagnet arrangement advantageously being arranged at a periphery of the wireless power transfer coil and advantageously being generally ring-shaped or, alternatively, shaped as a rectangle or other polygon.

In one or more embodiments, the electromagnet arrangement comprises a single electrical conductor being wrapped around a core.

In one or more embodiments, the electromagnet arrangement is arranged as a plurality of electromagnet segments, each electromagnet segment having an electrical conductor being wrapped around a core, wherein magnetic properties associated with each electromagnet segment are independently controllable.

In one or more embodiments, the single electrical conductor or the electrical conductors are litz wires.

In one or more embodiments, the core comprises one or more of a ferromagnetic material, the ferromagnetic material being one or more of iron, nickel, cobalt, or alloys comprising any of those elements, a nanocrystalline material, or zink, mangan or alloys comprising any of those elements.

In one or more embodiments, the electromagnet arrangement comprises one or more power sources being adapted to feed currents through the single electrical conductor or the electrical conductors.

In one or more embodiments, the device further comprises a controller being configured to control the controllable magnetic interaction by selective feeding of currents through the electromagnet arrangement, said currents being fed in a first direction or a second direction being opposite the first direction.

In one or more embodiments, the controller is configured to selectively feed the currents in the first direction for causing an attraction force to be generated between the device and the second device.

In one or more embodiments, the controller is configured to selectively feed the currents in the second direction for causing a repelling force to be generated between the device and the second device.

In one or more embodiments, the controller is configured to selectively feed the currents in the first and/or second directions, respectively, in accordance with a predetermined pattern for causing corresponding attraction and/or repelling forces to be generated between the device and the second device.

In one or more embodiments, said attraction and/or repelling forces according to the predetermined pattern generate a vibrating or tactile signal serving as an announcement or alert to a user of the device.

In one or more embodiments, the controller is configured to selectively feed the currents through one or more electromagnet segments for causing a relative movement of the second device with respect to the device.

In one or more embodiments, the controller is configured to cancel, increase or decrease said selective feeding of the currents in response to a predefined performance condition not being satisfied.

In one or more embodiments, the predefined performance condition indicates a concentric relationship between a magnetic centre and an electric centre, the magnetic centre being caused by the magnetic interaction and the electric centre being caused by the power transfer.

In one or more embodiments, the controller is configured to detect an occurrence of an event, and in response thereto adjust said selective feeding of currents, wherein the event is one of: a device event, a foreign object detection event, a malfunctioning event, an external event, or a signal event indicating the predefined performance condition not being satisfied.

In one or more embodiments, the device is a wireless power receiver device and the second device is a wireless power transmitter device.

In one or more embodiments, the device is a wireless power transmitter device and the second device is a wireless power receiver device.

In a second aspect, a system for testing wireless power transfer is provided. The system comprises a device for wireless power transfer comprising a wireless power transfer coil and an electromagnet arrangement arranged at the wireless power transfer coil. The system further comprises a testing device comprising a second wireless power transfer coil, wherein the testing device is configured to subject the device to one or more test cases involving wireless power transfer between the wireless power transfer coil and the second wireless power transfer coil. At least one of the test cases involves a controllable magnetic interaction between the device and the testing device by means of the electromagnet arrangement.

In one or more embodiments, said one or more test cases further involves one or more of the following: a concentric alignment of a magnetic centre and an electric centre, the magnetic centre being caused by the magnetic interaction and the electric centre being caused by the power transfer; a controlled relative movement of the device with respect to the testing device; a performance analysis of the power transfer and the controllable magnetic interaction; and a performance analysis of the power transfer and the controllable magnetic interaction upon the testing device comprising an (electro)magnet arrangement arranged at the second wireless power transfer coil.

In a third aspect, a method for testing wireless power transfer between a device for wireless power transfer and a testing device is provided, the device comprising a wireless power transfer coil and an electromagnet arrangement arranged at the wireless power transfer coil, the testing device comprising a second wireless power transfer coil. The method involves subjecting the device to one or more test cases comprising wireless power transfer between the wireless power transfer coil and the second wireless power transfer coil. At least one of the one or more test cases involves a controllable magnetic interaction between the device and the testing device by means of the electromagnet arrangement.

It should be emphasized that the term "comprises/comprising" when used in this specification is taken to specify the presence of stated features, integers, steps, or components, but does not preclude the presence or addition of one or more other features, integers, steps, components, or groups thereof. All terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Fig. 1a is a schematic block diagram of an embodiment of wireless power transfer between two devices where a wireless power receiver device has an electromagnet arrangement and a wireless power transmitter device has either a magnet arrangement or an electromagnet arrangement.
Fig. 1b is a schematic block diagram of an embodiment of wireless power transfer between two devices where a wireless power receiver device has either an electromagnet arrangement or a magnet arrangement and a wireless power transmitter device has an electromagnet arrangement.
Fig. 1c is a schematic block diagram of an embodiment of wireless power transfer between two devices where a wireless power transmitter device has an electromagnet arrangement and a wireless power receiver device does not have any (electro)magnet arrangement.
Fig. 1d is a schematic block diagram of an embodiment of wireless power transfer between two devices where a wireless power receiver device has an electromagnet arrangement and a wireless power transmitter device does not have any (electro)magnet arrangement.
Fig. 2 is a schematic block diagram showing wireless power receiver/transmitter devices according to a more detailed embodiment.
Fig. 3 is a schematic illustration of a top view of a wireless power receiver device having an electromagnet arrangement according to one embodiment where a single electrical conductor is wrapped around a core.
Fig. 4 is a schematic illustration of a top view of a wireless power receiver device having an electromagnet arrangement according to one embodiment where a plurality of electromagnet segments are provided. Each electromagnet segment has an electrical conductor wrapped around a core.
Fig. 5 is a schematic illustration where wireless power receiver/transmitter devices for wireless power transfer are attracted to one another.
Fig. 6 is a schematic illustration where wireless power receiver/transmitter devices for wireless power transfer are repelled from one another.
Fig. 7 is a schematic block diagram of a system for testing wireless power transfer where a testing device is in communication with a host device and is configured to test a wireless power transmitter device.
Fig. 8 illustrates the embodiment of Fig. 7 but where the host device and the testing device are integrated into a testing device.
Fig. 9 is a schematic block diagram of a system for testing wireless power transfer where a testing device is in communication with a host device and is configured to test a wireless power receiver device.
Fig. 10 illustrates the embodiment of Fig. 9 but where the host device and the testing device are integrated into a testing device.
Fig. 11 is a schematic block diagram of a method for testing wireless power transfer between a device for wireless power transfer and a testing device.

### DETAILED DESCRIPTION OF EMBODIMENTS

Embodiments of the invention will now be described with reference to the accompanying drawings. The invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular embodiments illustrated in the accompanying drawings is not intended to be limiting of the invention. In the drawings, like numbers refer to like elements.

In the following detailed disclosure, wireless power receiver devices 10 and wireless power transmitter devices 20 will be described according to various embodiments. For reasons of brevity, these are sometime being shortened to a "power receiver/transmitter device 10; 20", or simply "device 10; 20". The skilled person will appreciate that these alternative writings refer to the same type of devices.

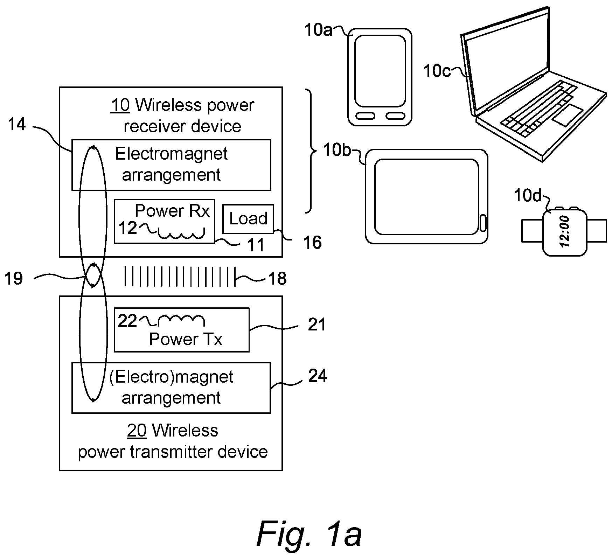

Fig. 1a illustrates wireless power transfer between a wireless power receiver device 10 and a wireless power transmitter device 20. The wireless power receiver device 10 may be a mobile device. The mobile device may, for instance, be a mobile terminal (e.g. smartphone) 10a, tablet computer 10b (e.g. surfpad), laptop computer 10c, a smartwatch 10d, camera, audio player, rechargeable toothbrush, wireless headset, or another kind of consumer product or appliance.

The wireless power transfer is compliant with the Qi standard by the WPC; hence, the wireless power transmitter device 20 may be a base station in the Qi terminology. However, as already mentioned, the invention is generally applicable also to other wireless power transfer standards or approaches, including but not limited to the ones mentioned in the Background section.

The wireless power transmitter device 20 comprises a wireless power transmitter 21 having at least one wireless power transmitter coil 22. The wireless power transmitter 21 may have a plurality of transmitter coils 22; the transmitter coils can then be arranged in a spaced apart arrangement and/or in a partly overlapping manner.

The wireless power receiver device 10 comprises a wireless power receiver 11 having a wireless power receiver coil 12. In operation, the wireless power transmitter device 20 will transfer power wirelessly to the wireless power receiver device 10 by way of magnetic induction 18 via the wireless power transmitter coil 22 and wireless power receiver coil 12.

The power received by the wireless power receiver coil 12 will drive a load 16 in the wireless power receiver device 10. Typically, the load 16 may be a rechargeable battery, such as a lithium ion battery; hence, the wireless power transmitter device 20 will act as a wireless power charger for the wireless power receiver device 10. In another scenario, the load 16 may be electronic circuitry in the wireless power receiver device 10, wherein the wireless power transmitter device 20 will act as a wireless power supply for the wireless power receiver device 10.

The wireless power receiver device 10 comprises an electromagnet arrangement 14. The electromagnet arrangement 14 is arranged at the wireless power transfer coil 12. The electromagnet is configured for controllable magnetic interaction 19 between the wireless power receiver device 10 and the wireless power transfer device 20. A (DC) current being fed through the electromagnet arrangement 14 will generate a magnetic field. The magnetic field can be controlled in a predictable and dynamic manner such that the controllable magnetic interaction 19 may align the devices 10, 20 regardless of the prevailing type of wireless power transfer technologies (i.e. Qi, MagSafe, or other standards known in the art).

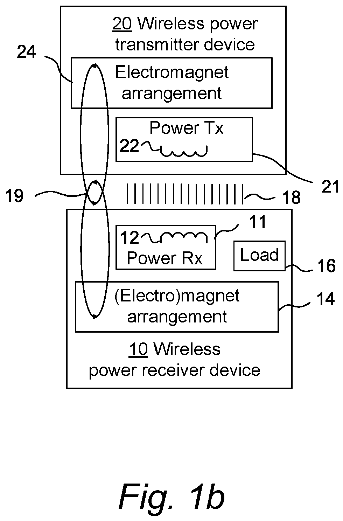

In the embodiment shown in Fig. 1a, the wireless power transmitter device 20 also comprises either one of a (permanent) magnet arrangement or an electromagnet arrangement, hence the "(electro)magnet arrangement 24" notion in the figure. However, the skilled person will appreciate that both of the devices 10, 20 need not have a respective electromagnet arrangement 24 in order to achieve the intended functionality as described herein. Other examples are shown in Figs. 1b-d.

In Fig. 1b, an embodiment of wireless power transfer between a wireless power receiver device 10 and a wireless power transmitter device 20 is illustrated. The embodiment of Fig. 1b differs from that of Fig. 1a in that the wireless power transmitter device 20 comprises an electromagnet arrangement 24 and the wireless power receiver device 10 comprises an (electro)magnet arrangement 14. To this end, the electromagnet arrangement 24 arranged at the wireless power transmitter coil 22 is configured for controllable magnetic interaction 19.

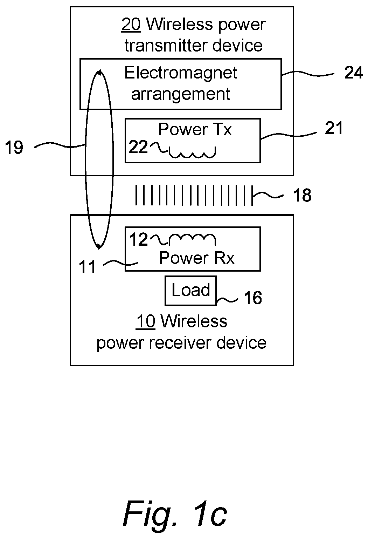

In Fig. 1c, an embodiment of wireless power transfer between a wireless power receiver device 10 and a wireless power transmitter device 20 is illustrated. In this embodiment, the wireless power transmitter device 20 comprises an electromagnet arrangement 24. The wireless power receiver device 10 does not have any electromagnet arrangement nor magnet arrangement.

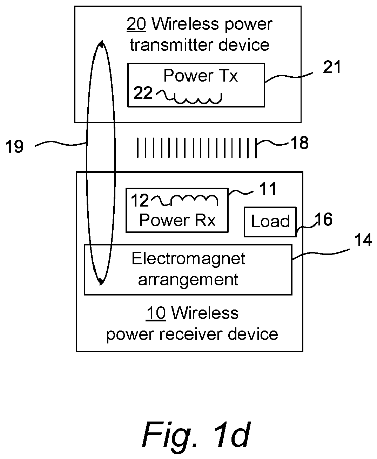

In Fig. 1d, an embodiment of wireless power transfer between a wireless power receiver device 10 and a wireless power transmitter device 20 is illustrated. In this embodiment, the wireless power receiver device 10 comprises an electromagnet arrangement 14. The wireless power transmitter device 20 does not have any electromagnet arrangement.

As seen in Figs. 1a-d, a plurality of different setups of wireless power transfer between various devices 10, 20 have been shown. To summarize, the controllable magnetic interaction 19 between the devices 10, 20 can be generated in wireless power transfer systems where at least one of the devices 10; 20 comprise the electromagnet arrangement 14; 24. The other device 20; 10 may have no magnets at all, a magnet arrangement or an electromagnet arrangement 24; 14. The present invention thus meets all requirements in terms of interoperability and safety/regulatory aspects between a large number of wireless power transfer devices associated with different wireless power transfer technologies, while at the same time obtaining the benefits of the controlled magnetic interaction 19 between the devices 10, 20.

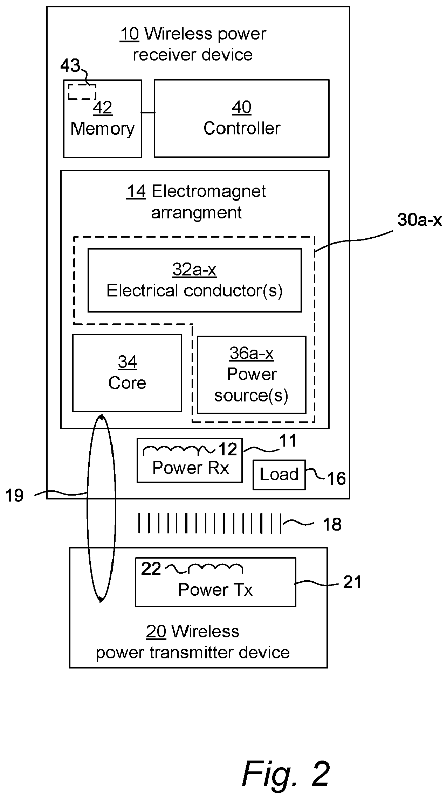

With reference to Fig. 2, a wireless power receiver device 10 for wireless power transfer between the device 10 and a wireless power transmitter device 20 is shown in more detail according to one embodiment. In alternative embodiments, the units shown in the device 10 may be arranged in the device 20.

The electromagnet arrangement 14 may be created as a solenoid comprising one or more electrical conductors 32a-x, one or more power sources 36a-x and a core 34. In addition, the electromagnet arrangement 14 may be arranged as a plurality of electromagnet sections 30a-x, each section 30a-x comprising a respective electrical conductor 32a-x and power source 36a-x, where the electrical conductors 32a-x are wrapped around the same core 34. Alternatively, a plurality of cores 34 may be realized.

The power source(s) 36a-x may be batteries or other sources of electricity.

The electrical conductors 32a-x may be electrical wires, for instance litz wires, or any other type of suitable electrical conductor. A (DC) current being fed by the power source(s) 36a-x through the electrical conductor(s) 32a-x of the electromagnet arrangement 14 will generate a magnetic field. Depending on the design and configuration of the electromagnet arrangement 14, a magnetic center may be adjusted. To this end, the electromagnet arrangement 14 is not limited to any particular shape, size or component, provided that the magnetic interaction 19 can be generated. As an example, the electromagnet arrangement 14 can be circular or rectangular.

The core 34 may comprise a ferromagnetic material. The ferromagnetic material may be one or more of iron, nickel or cobalt. Alternatively, the ferromagnetic material may be an alloy comprising one or more of these elements. For instance, the iron alloys ferrite and magnetite have been shown to provide satisfactory magnetic properties when used in electromagnet arrangements 14 for wireless power transfer devices 10; 20.

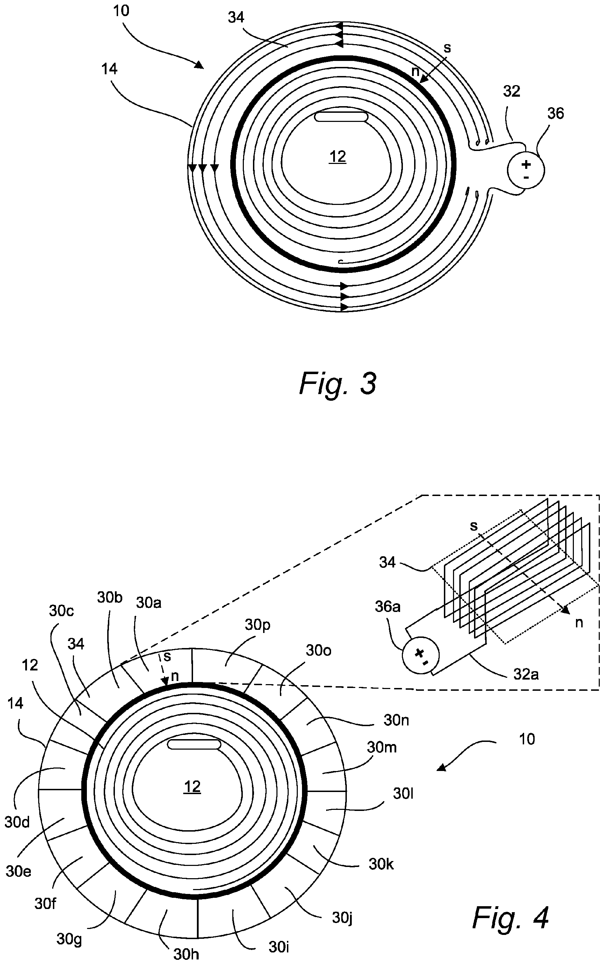

The wireless power receiver device 10 further comprises a controller 40. The controller 40 is configured for performing different functionalities of the wireless power receiver device 10 (and/or transmitter device 20 where the controller 40 is arranged in such device 20). More specifically, the controller 40 is configured to control the controllable magnetic interaction 19 by selective feeding of currents through the electromagnet arrangement 14. The currents are fed in a first direction through the electromagnet arrangement 14 or in a second direction through the electromagnet arrangement 14, wherein the second direction is opposite from the first direction. Generally, depending on which direction the current is fed in, and depending on whether one or both of the wireless power transfer devices 10, 20 comprise electromagnet arrangements 14, 24, different behaviours of the controllable magnetic interaction 19 is achieved. The meaning of "first and second directions" will be further explained later on in the present disclosure with reference to Figs. 3 and 4.

The controller 40 may be implemented in any known controller technology, including but not limited to microcontroller, processor (e.g. PLC, CPU, DSP), FPGA, ASIC or any other suitable digital and/or analog circuitry capable of performing the intended functionality. The controller 40 is connected to a memory 42, which may be implemented in any known memory technology, including but not limited to E(E)PROM, S(D)RAM or flash memory. The memory 42 may be integrated with or internal to the controller 40. The memory 42 may store program instructions 43 for execution by the controller 40, as well as temporary and permanent data used by the controller 40. For instance, the memory 42 may store program instructions 43 which, when executed by a processing unit (not shown) of the controller 40, causes the controller 40 to perform functionalities for controlling the controllable magnetic interaction 19 by said selective feeding of currents through the electromagnet arrangement 14. The instructions 43 can, for instance, indicate in which direction the current should be fed, for how long, with how many pulses per time unit, which of the segment(s) 30a-x to activate at what time and for how long, what current strength, and so forth. The skilled person realizes other appropriate program instructions 43 that may influence the controllable magnetic interaction 19 in various ways, and the present invention is not limited to one particular type of instructions 43 for the controllable magnetic interaction 19.

The controllable magnetic interaction 19 may align the devices 10, 20 so that the total energy of the magnetic field is minimized. To this end, the magnitude of magnetic fields contained within the material of the electromagnet arrangement 14 is maximized. In addition, the presence of the electromagnet arrangement 14 may enable the wireless power receiver device 10 to increase/decrease the field strength of the electromagnet arrangement 14 by a corresponding increase/decrease of current being fed through said electromagnet arrangement 14. This can be beneficial for overcoming a larger friction due to product surface finishings, or to overcome gravity. The wireless power transfer may therefore be realized as a wireless power transfer system being mounted to an essentially vertical wall, or even a ceiling, whereby the generated controllable magnetic interaction 19 is capable of wirelessly transferring power between the devices 10, 20 while at the same time attracting the devices 10, 20 to one another. In situations where the gravity and/or friction would hold the devices 10, 20 in place without magnetic attraction (e.g. when placed on a table or other supporting surface), the electromagnet arrangement 14 may be activated for the first few time units (e.g. milliseconds, seconds), for instance as a set of one or more alignment pulses of varying time, and then remain dormant most of the time. If something occurs during a charging procedure, such as an external event that causes misalignment of the devices, the electromagnet arrangement 14 may be reactivated for another set of alignment pulses. The memory 42 may store program instructions 43 which, when executed by a processing unit of the controller 40, manages alignment issues due to external events.

Fig. 3 shows one embodiment of a wireless power receiver device 10 having an electromagnet arrangement 14 where a single electrical conductor 32 is wrapped around a core 34. A single power source 36 is adapted to feed a current through the single electrical conductor 32, which is controllable by the controller 40 as previously discussed. The electromagnet arrangement 14 is generally ring-shaped and arranged at a periphery of the wireless power transfer coil 12. Moreover, although not explicitly shown from the top view of Fig. 3, the electromagnet arrangement 14 is arranged in the same (vertical) plane as the wireless power transfer coil 12. The arrows indicate the direction of the current being fed through the single electrical conductor 32. To this end, in the example shown the current is being fed in a first direction from the positive terminal towards the negative terminal of the power source 36. As also discussed above, this direction may be switched to instead originate from the negative terminal and end at the positive terminal.

Fig. 4 shows another embodiment of a wireless power receiver device 10. Compared to the embodiment of Fig. 3, the embodiment of Fig. 4 has an electromagnet arrangement 14 which is arranged as a plurality of electromagnet segments 30a-p. In this example, there are 16 segments 30a-p, but alternatives may be realized with any number of segments, as previously explained. One example of a segment 30a is shown in more detail in Fig. 4. The segment 30a comprises an electrical conductor 32a being wrapped around a core 34. The core 34 is common for all of the segments 30a-p and conductors 32a-p. Moreover, the segment 30a comprises a power source 36a for feeding currents through the electrical conductor 32a. Hence, in the example of Fig. 4 there are 16 segments 30a-p, 16 electrical conductors 32a-p, 16 power sources 36a-p and one core 34. Alternative embodiments may be realized where one or more power sources are supplying currents to one or more electrical conductors, and where the electromagnet arrangement 14 comprises one or more cores 34.

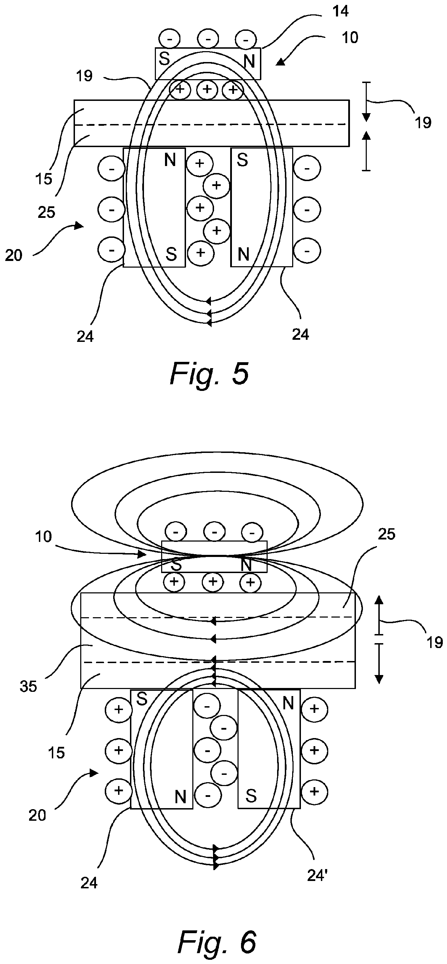

Reference to Figs. 5 and 6 will now be made. For reasons of brevity, embodiments as discussed with reference to these figures assume that the device 10 is a wireless power receiver device 10 being charged by the device 20 being a wireless power transmitter device 20, similar to Fig. 1a. To this end, the device 10 comprises an electromagnet arrangement 14 that can be influenced by means of currents in accordance with the subject matter described herein. The skilled person readily understands that device setups according to any one of Figs. 1b, 1c or 1d can alternatively be realized.

Fig. 5 is a schematic illustration where the devices 10, 20 for wireless power transfer are attracted to one another. A centre block shown in the figure represents respective interfacing surfaces 15, 25 of the devices 10, 20. For instance, the surface 15 may be a protective shell of a mobile phone 10, and the surface 25 may be a surface finishing of a charging device 20. The currents are fed through the electromagnet arrangement 14 in a first direction such that a magnetic interaction 19 being an attraction force is generated between the devices 10, 20. The devices 10, 20 are consequently aligned such that the total energy of the magnetic fields is minimized, meaning that the magnitude of the magnetic fields contained within the material of the electromagnet arrangement 14 (e.g. the ferromagnetic core) is maximized. This means that the devices 10, 20 will be aligned such that the path of the resulting magnetic fields will become generally circular, as shown in the figure.

Fig. 6 is a schematic illustration where the devices 10, 20 for wireless power transfer are repelled from one another. Compared to the embodiment of Fig. 5, the device 10 has reversed the feeding direction of the current in the electromagnet arrangement 14. The current is thus selectively fed in a second direction being opposite the first direction. Consequently, a repelling force is being generated between the devices 10, 20. An intermediate space 35 is thereby created in between the interfacing surfaces 15, 25, indicating that the device 10 magnetically levitates (Maglev) above the device 20 at a distance defined by the intermediate space 35.

The magnetic interaction 19 between the devices 10, 20 as shown in Fig. 5 and 6 are just two examples of how the devices 10, 20 may interact with one another. Since the magnetic interaction 19 is controllable, for instance by means of the controller 40 as described in Fig. 2, numerous interesting and useful use cases can be realized. Some exemplifying use cases will now be described, none of which are to be interpreted as limiting. Moreover, the skilled person realizes other related use cases that can be provided by means of the controllable magnetic interaction 19.

The currents may be selectively fed in the first and/or second directions in accordance with a predetermined pattern. Corresponding attraction and/or repelling forces are thus generated between the devices 10, 20. The predetermined pattern can cause a plurality of different behaviours of the controllable magnetic interaction 19. One example of such behaviour is that the attraction and/or repelling forces as generated according to the predetermined pattern may cause a vibrating or tactile signal that serves as an announcement or alert to a user of the device.

The currents may be selectively fed through one or more electromagnet segments, for instance the electromagnet segments 30a-x (30a-p) as described with reference to Figs. 2 and 4. Selectively feeding currents through these segments 30a-p may be performed by selectively activating or deactivating one or more of the power sources 36a-x, or selectively controlling one or more of the power sources 36a-x to feed currents in respective first and/or second directions. An effect of such a controlling procedure is that relative movements between the devices 10, 20 can be caused. For instance, a receiver device 10 being charged on a transmitter device 20 may be controlled such that a rotating motion is created for the device 10 around its own axis by means of magnetic levitation. This movement may assist in controlling an orientation of the device 10 between portrait/landscape modes. Such control can both be useful for different scenarios and/or be aesthetically pleasing.

The currents may be cancelled, increased or decreased if it is detected that a predefined performance condition is not satisfied. The predefined performance condition may be indicative of a concentric relationship between a magnetic centre and an electric centre, where the magnetic centre is caused by the magnetic interaction 19 and the electric centre is caused by the power transfer. For instance, the predefined performance condition may specify to what extent the magnetic/electrical centers should be aligned, e.g. by 80%, 90%, 99%, or virtually any suitable type of relationship. It is thus possible to automatically adjust or cancel the feeding strength of the currents. For instance, more impermeable interfacing surfaces 15, 25 may require an increase in the strengths of the currents to achieve the desired effect, and vice versa for more permeable interfacing surfaces 15, 25. When no magnetic attraction or repelling effect is desired at all, for instance to achieve power savings, the feeding of currents may be cancelled.

An occurrence of an event may be detected by the device 10. In response thereto, the selective feeding of the currents may be adjusted. Such adjustment of currents may be a change of direction or a control of one or more electromagnet segments 30a-x (30a-p), as described above. The event may be a device event, a foreign object detection event, a malfunctioning event, an external event, or a signal event indicating that the predefined performance condition is not satisfied.

The device event may be a notification being sent to the device, such as a text message, a phone call, a social media notification, an application notification, a software/firmware update, and so forth. An example is that a detection of an incoming video phone call may cause rotation of the phone into landscape mode such that a larger view of the incoming video phone call is achieved. Another example is that a detection of a text message from an important contact may provide a specific tactile pattern to be generated such that the user of the device 10 easily and quickly can recognize the identity of the important contact having sent the text message. A third example is that the device event may alert the user of the device 10 in a specific manner at a specific charging percentage, e.g. at 25%, 50%, 75% or 100% of a total charging capacity (for instance of the load 16 in Figs. 1a-1d).

The foreign object detection event may be an indication that a foreign object has been detected in the vicinity of any of the devices 10, 20. The foreign object may thus be immediately repelled away from the charging station such that it does not interfere and/or negatively affects the transfer of power. Alternatively or additionally, an ongoing power transfer between the devices 10, 20 may be aborted.

The malfunctioning event may be an indication that one or more components of either one of the devices 10, 20 does not behave as intended or that they are at least partly malfunctioning. The malfunctioning event can, for instance, be an indication of a component overheating. The detection of the malfunctioning event can result in the devices 10, 20 being repelled away from one another. Alternatively or additionally, an ongoing power transfer between the devices 10, 20 may be aborted.

The external event may indicate some external cause of adjusting the feeding of currents, e.g. extreme weather (heat, moisture, rain, etc.) or an applied external force (something or someone physically affecting the device placement).

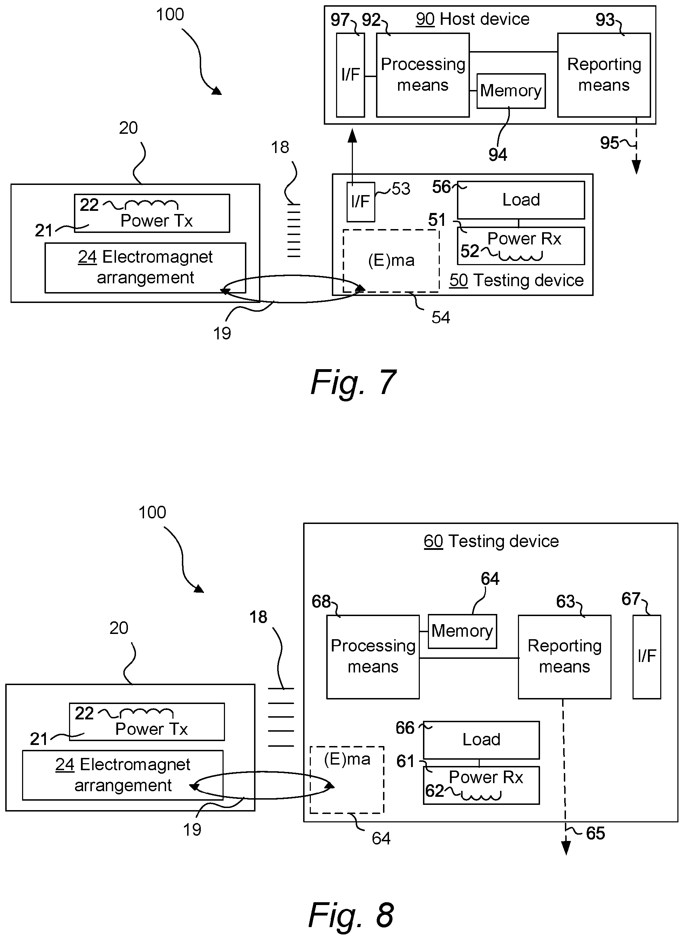

With reference to Figs. 7-10, systems 100 for testing wireless power transfer are shown according to different embodiments. Generally, each one of the systems 100 shown in Figs. 7-10 comprises one of the devices 10, 20 for wireless power transfer as has been discussed herein. The other one of the devices 20, 10 is embodied as a testing device 50; 60; 70; 80. The testing device 50; 60; 70; 80 emulates the behaviour and functionality of the other part of a wireless power transfer system. For instance, if a wireless power receiver device 10 is a device under test, the testing device 50, 60; 70; 80 emulates the behaviour of a wireless power transmitter device 20, and vice versa. The notion "(E)ma" in the figures refers to an (electro)magnet arrangement. This feature is optional. It is not required that the testing device 50; 60; 70; 80 has an (electro)magnet arrangement 54; 64; 74; 84, as the electromagnet arrangement 14; 24 of the device 10; 20 can be tested regardless. However, the (electro)magnet arrangement 54; 64; 74; 84 may be arranged in the testing device 50; 60; 70; 80 for testing of additional/alternative interoperational functionalities.

The testing device 50; 60; 70; 80 is configured to subject the device 10; 20 to one or more test cases involving wireless power transfer between the wireless power transfer coil 12; 22 of the device 10; 22 and a wireless power transfer coil 52; 62; 72; 82 of the testing device 50; 60; 70; 80. At least one of the test cases involves a controllable magnetic interaction 19 between the device 10; 20 and the testing device 50; 60; 70; 80 by means of the electromagnet arrangement 14; 24, and possibly also by means of the (electro)magnet arrangement 54; 64; 74; 84 of the testing device 50; 60; 70; 80. The test cases may be configured such that various functionalities of the device 10; 20 are tested.

The test cases may comprise a concentric alignment of a magnetic centre and an electric centre, where the magnetic centre is caused by the magnetic interaction 19 and the electric centre is caused by the power transfer. To this end, the test cases may be adapted to test various relative placements between the device 10; 20 and the testing device 50; 60; 70; 80 to derive the optimal concentric alignment based on various factors, such as properties of e.g. the electromagnet core (various ferromagnetic materials), the electrical conductors (litz wires or other conductors), the interfacing surfaces (different permeabilities thereof), the space between the device 10; 20 and the testing device 50, 60; 70; 80 (its volume and how it affects the concentric alignment), and so forth.

The test cases may comprise a controlled relative movement of the device 10; 20 with respect to the testing device 50; 60; 70; 80. To this end, the test cases may be adapted to test how relative movement of the devices 10; 20 affects the wireless power transfer.

The test cases may comprise a performance analysis of the power transfer and the controllable magnetic interaction 19. The test cases may comprise a respective performance analysis for when the testing device 50, 60; 70; 80 does not have any magnet arrangement, and for when the testing device 50, 60; 70; 80 comprises an (electro)magnet arrangement 54; 64; 74; 84. To this end, it may be possible to test a variety of different interoperability schemes between devices having and not having magnetic capabilities as described herein.

Fig. 7 is a schematic block diagram which shows a testing device 50 for testing a wireless power transmitter device 20 (device under test) under the control of a host device 90. The host device 90 has an interface 97 for receiving the data obtained by the testing device 50. The interfaces 53 and 97 may be of any suitable type, including simple wiring, a serial interface such as USB, a wireless interface such as Bluetooth of WiFi, etc. The testing device 50 may for example have a cable which may be part of the interface 53 to the host device 90.

The host device 90 comprises processing means 92 for processing data received from the testing device 50. The processing means 92 may comprise a programmable device, such as a microcontroller, central processing unit (CPU), digital signal processor (DSP) or field-programmable gate array (FPGA) with appropriate software and/or firmware, and/or dedicated hardware such as an application-specific integrated circuit (ASIC). The processing means 92 can be connected to or comprise a computer readable storage medium such as a disk or memory 94. The memory 94 may be implemented using any commonly known technology for computer-readable memories such as ROM, RAM, SRAM, DRAM, FLASH, DDR, SDRAM or some other memory technology. Furthermore, the host device 90 comprises reporting means 93 for communicating or presenting the data processing results obtained by the processing means 92. This may involve presentation of graphical information on a local user interface (e.g. display) of the host device 90, generating of visual and/or audible alarms, or communication of information to an external device, i.e. output at 95. Such an external device may for example be a computer or a mobile phone.

The testing device 50; 60 may have any suitable shape. In one embodiment the testing device 50; 60 is arranged in a way that allows testing of the wireless power transmitter device 20 in a situation where the testing device 50; 60 emulates a mobile device. In that situation, the testing device 50; 60 may be similar in shape to a smartphone, for example having essentially the shape of a thin box with rounded edges and corners.

In one embodiment, the testing device 50; 60 could be an end user device, such as a consumer device, that has a testing mode. Hence, the testing device 50; 60 could be a mobile device such as for instance, a mobile terminal (e.g. smartphone), tablet computer (e.g. surfpad), laptop computer or another kind of consumer product or appliance being configured with a testing mode.

The testing device 50; 60 may comprise a housing having a bottom side adapted for placement on a surface of the wireless power transmitter device 20. Moreover, the housing may comprise a top side opposite to the bottom side. At least some parts of the housing may be made of plastic or another material suitable for admitting inductive coupling between the wireless power transmitter coil(s) 22 of the wireless power transmitter device 20 and the wireless power receiver coil(s) 52; 62 of the testing device 50; 60.

Fig. 8 is a schematic block diagram that shows a testing device 60 according to another embodiment. The embodiment of Fig. 8 differs from that of Fig. 7 in that the testing device 60 of Fig. 8 is an integrated testing/host device 60. The testing device 60 comprises processing means 68 for processing data. The processing means 68 may be the same as has been described with reference to Fig. 7 (cf. element 92). The processing means 68 is connected to or comprises a computer readable storage medium such as a disk or memory 64. The memory 64 may be configured to store data relating to the test session. Furthermore, the testing device 60 may have reporting means 63 for communicating or presenting the data processing results obtained by the processing means 68. This may involve presentation of graphical information on a local user interface (e.g. display) of the testing device 60, generating of visual and/or audible alarms, or communication of information to an external device, as seen at 65. Such an external device may for example be a computer or a mobile phone. Additionally to the reporting means 63 or alternatively, the testing device 60 may further have a communication interface 67 for receiving data from the wireless power transmitter device 20. The communication interface 67 may be of any suitable type, including simple wiring, a serial interface such as USB, a wireless interface such as Bluetooth of WiFi, etc.

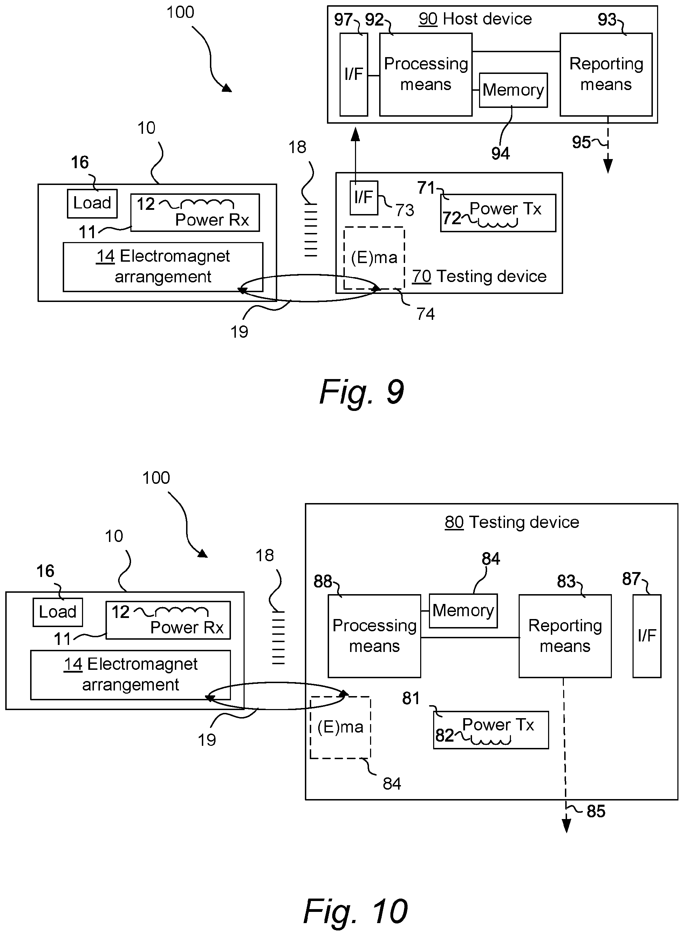

Figs. 9 and 10 are schematic block diagrams that show two embodiments of a system 100 comprising a testing device 70; 80 for testing a wireless power receiver device 10. In both embodiments, the testing devices 70; 80 comprise a wireless power transmitter 71; 81 with at least one wireless power transmitter coil 72; 82. Similar to the embodiments of Figs. 7 and 8, the testing devices 70; 80 are in operative communication with processing means 88; 92 (e.g. a controller) and its associated memory 84; 94, either by having the processing means 88 arranged in the testing device 80 itself (as in Fig. 10) or by being in communication with a host device 90 having the processing means 92 (as in Fig. 9).

In operation during a test session, the testing device 70; 80 will initiate a wireless transfer of power to the wireless power receiver device 10 by way of magnetic induction 18 via the wireless power transmitter coil(s) 72; 82 and the wireless power receiver coil(s) 12 during an operational time of a test session.

The testing device 70; 80 may have any suitable shape. In one embodiment the testing device 70; 80 is arranged in a way that allows testing of the wireless power receiver device 10 in a situation where the testing device 70; 80 emulates a wireless charger. In that situation, the testing device 70; 80 may be similar in shape corresponding to a wireless charger.

In one embodiment, the testing device 70; 80 could be an end user device, such as a consumer device, that has a testing mode. Hence, the testing device 70; 80 could be a wireless charger or another kind of consumer product or appliance being configured with a testing mode having a wireless transmitter coil.

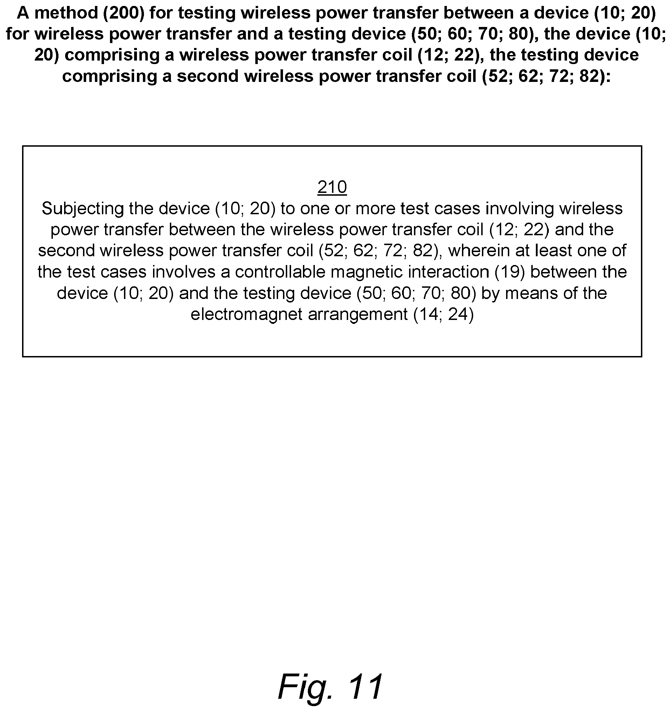

With reference to Fig. 11, a schematic flowchart diagram of a method 200 for testing wireless power transfer is shown. The wireless power transfer is between a device 10; 20 for wireless power transfer (e.g. receiver/transmitter) and a testing device 50; 60; 70; 80. The device 10; 20 comprises a wireless power transfer coil 12; 22 and an electromagnet arrangement 14; 24 arranged at the wireless power transfer coil 12; 22. The testing device 50; 60, 70; 80 comprises a second wireless power transfer coil (52; 62; 72; 82). The method 200 comprises a step of subjecting 210 the device 10; 20 to one or more test cases involving wireless power transfer between the wireless power transfer coil 12; 22 and the second wireless power transfer coil 52; 62; 72; 82. At least one of the one or more test cases comprises a controllable magnetic interaction 19 between the device 10; 20 and the testing device 50; 60; 70; 80 by means of the electromagnet arrangement 14; 24. Generally, the method 200, and particularly the test cases thereof, may correspond to the test cases as were described with reference to the systems 100 of Figs. 7-10.

In the following sections of the detailed description, one or more additional or alternative embodiments of the present invention are described, none of which are to be seen as limiting to the scope of the appended claim set.

By enhancing the wiring of the electromagnet (i.e. the electromagnet arrangements 14; 24), it will also become possible to move the electromagnetic field a few mm left/right or up/down in the plane parallel to the magnet ring, making it possible to effectively "move the center of the magnetic ring". This is simply possible by duplicating the electric wires that form the electromagnet, placing them a fraction further than the original ring and with a switching element determining which of the two separate traces the current will flow through, establishing either the original electromagnet or the fractionally misaligned electromagnet.

Elaborating on the possibility to move the electromagnetic field allows accurate alignment of the electric centre with the magnetic centre. Products in the market are assembled with limited accuracy. The magnetic centre is defined by the position (and strength) of the permanent magnet segments. The electrical centre is defined by the position (and shape) of the power transfer coil. Ideally the two are exactly concentric but this is never exactly the case due to production and positioning tolerances. The electromagnet could compensate for such an offset by using electrical means to move the magnetic centre until the best alignment between magnetic and electric centre is achieved. By combining a control mechanism of the magnets with applicant's existing technology, namely maximum signal strength finder (as described in, for instance WO 2019/185473, incorporated by reference herein), it will become possible for the wireless power transfer system to, by its own, find the optimal relative position between devices for wireless power transfer.

Furthermore, by enabling control of each separate segment in the ring it becomes possible to create relative movement using magnetic levitation, allowing for example to rotate the iPhone on the charger, to facilitate for example content that would be better viewed in landscape orientation instead of portrait mode. Magnetic levitation allows for a whole new dimension of user interaction since the movement of the iPhone can be controlled with the electromagnets. For example to tilt the iPhone on the charger when fully charged to present itself to the user, or to create specific movement (wobble or pulsating) when a message or phone-call is received.

It would also be possible for the electromagnet to repel the devices by using a magnet field of opposing direction. This could be useful in situations where safety requires the physical decoupling of the devices. Typically, this would require a user to be prompted to remove the device but often the devices are charging stationary without a user paying constant attention to the charging status. Another application where this is useful is when the user is trying to combine a Qi or Apple certified device with a device that has no such certification. This would provide an additional clear user feedback when the devices detect something is wrong. Even devices that do not have magnets may be repelled by a device that does have magnets, if the device without magnets have sufficient conducting material close to the interface surface. An alternating magnetic field, produced by an alternating current, may be used in this case. Any known suitable technique may be applied for this.

For embodiments which use a ferromagnetic core, the inventors note that ferromagnetic materials typically have a very high electrical resistance and thus will induce far less currents than metal. The FOD/eddy current induction problems that were referred to in the Background section for a MagSafe device being provided with permanent metal magnets, will therefore not appear.

This invention can be applied to a wireless power receiver device as well as to a wireless power transmitter device. Hence, the invention is applicable for consumer (end user) products. In addition, the invention is applicable for test equipment for wireless power testing. For instance, with the electromagnet the magnetic center can be moved relative to the electrical center of the test assembly. That allows testing of a device with specific misalignments without having to use a robot for positioning. One would be able to mechanically move the magnet ring a fraction to the left or right while keeping all other parts of the assembly in the same position - the phone (which solely aligns based on the magnetic pull) would then also be positioned that same fraction to the side. This may allow testing the impact of production tolerances (that would misalign the magnet ring and the power coil). Now, the electromagnet makes this possible without that mechanical movement of the magnet ring. Instead of moving the whole ring it is possible to just run the electromagnet currents through a slightly different configuration resulting in a different magnetic pull.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A device (10; 20) for wireless power transfer between the device (10; 20) and a second device (20; 10) for wireless power transfer, wherein the device (10; 20) comprises:
a wireless power transfer coil (12; 22) adapted to transfer power between the wireless power transfer coil (12; 22) and a second wireless power transfer coil (22; 12) of the second device (20; 10); and
an electromagnet arrangement (14; 24) arranged at the wireless power transfer coil (12; 22), wherein the electromagnet arrangement (14; 24) is configured for controllable magnetic interaction (19) between the device (10; 20) and the second device (20; 10).

2. The device (10; 20) according to claim 1, wherein the electromagnet arrangement (14; 24) is generally ring-shaped and arranged at a periphery of the wireless power transfer coil (12; 22).

3. The device (10; 20) according to claim 1 or 2, wherein the electromagnet arrangement (14; 24) is arranged in the same plane as the wireless power transfer coil (12; 22).

4. The device (10; 20) according to any one of the claims 1 to 3, wherein the electromagnet arrangement (14; 24) comprises a single electrical conductor (32) being wrapped around a core (34).

5. The device (10; 20) according to any one of the claims 1 to 3, wherein the electromagnet arrangement (14; 24) is arranged as a plurality of electromagnet segments (30a-x), each electromagnet segment (30a-x) having an electrical conductor (32a-x) being wrapped around a core (34), wherein magnetic properties associated with each electromagnet segment (30a-x) are independently controllable.

6. The device (10; 20) according to claim 4 or 5, wherein the single electrical conductor (32) or the electrical conductors (32a-x) are litz wires.

7. The device (10; 20) according to any one of the claims 4 to 6, wherein the core (34) comprises one or more of:
a ferromagnetic material, the ferromagnetic material being one or more of iron, nickel, cobalt, or alloys comprising any of those elements,
a nanocrystalline material, or
zink, mangan or alloys comprising any of those elements.

8. The device (10; 20) according to any one of the claims 4 to 7, wherein the electromagnet arrangement (14; 24) comprises one or more power sources (36; 36a-x) being adapted to feed currents through the single electrical conductor (32) or the electrical conductors (32a-x).

9. The device (10; 20) according to any preceding claim, further comprising a controller (40) being configured to control the controllable magnetic interaction (19) by selective feeding of currents through the electromagnet arrangement (14; 24), said currents being fed in a first direction or a second direction being opposite the first direction.

10. The device (10; 20) according to claim 9, wherein the controller (40) is configured to selectively feed the currents in the first direction for causing an attraction force to be generated between the device (10; 20) and the second device (20; 10).

11. The device (10; 20) according to claim 9 or 10, wherein the controller (40) is configured to selectively feed the currents in the second direction for causing a repelling force to be generated between the device (10; 20) and the second device (20; 10).

12. The device (10; 20) according to any one of the claims 9 to 11, wherein the controller (40) is configured to selectively feed the currents in the first and/or second directions, respectively, in accordance with a predetermined pattern for causing corresponding attraction and/or repelling forces to be generated between the device (10; 20) and the second device (20; 10).

13. The device (10; 20) according to claim 12, wherein said attraction and/or repelling forces according to the predetermined pattern generate a vibrating or tactile signal serving as an announcement or alert to a user of the device (10; 20).

14. The device (10; 20) according to any one of the claims 9 to 13, wherein the controller (40) is configured to selectively feed the currents through one or more electromagnet segments (30a-x) for causing a relative movement of the second device (20; 10) with respect to the device (10; 20).

15. The device (10; 20) according to any one of the claims 9 to 14, wherein the controller (40) is configured to cancel, increase or decrease said selective feeding of the currents in response to a predefined performance condition not being satisfied.

16. The device (10; 20) according to claim 15, wherein the predefined performance condition indicates a concentric relationship between a magnetic centre and an electric centre, the magnetic centre being caused by the magnetic interaction (19) and the electric centre being caused by the power transfer.

17. The device (10; 20) according to any one of the claims 9 to 16, wherein the controller (40) is configured to detect an occurrence of an event, and in response thereto adjust said selective feeding of currents, wherein the event is one of:
a device event,
a foreign object detection event,
a malfunctioning event,
an external event, and
a signal event indicating the predefined performance condition not being satisfied.

18. The device (10; 20) according to any one of the claims 1-17, wherein the device (10; 20) is a wireless power receiver device (10).

19. The device (10; 20) according to any one of the claims 1-17, wherein the device (10; 20) is a wireless power transmitter device (20).

20. A system (100) for testing wireless power transfer, the system (100) comprising:
a device (10; 20) for wireless power transfer comprising a wireless power transfer coil (12; 22) and an electromagnet arrangement (14; 24) arranged at the wireless power transfer coil (12; 22); and
a testing device (50; 60; 70; 80) comprising a second wireless power transfer coil (52; 62; 72; 82), wherein the testing device (50; 60; 70; 80) is configured to subject the device (10; 20) to one or more test cases involving wireless power transfer between the wireless power transfer coil (12; 22) and the second wireless power transfer coil (52; 62; 72; 82),
wherein at least one of the one or more test cases involves a controllable magnetic interaction (19) between the device (10; 20) and the testing device (50; 60; 70; 80) by means of the electromagnet arrangement (14; 24).

21. The system (100) according to claim 20, wherein said one or more test cases further involves one or more of the following:
a concentric alignment of a magnetic centre and an electric centre, the magnetic centre being caused by the magnetic interaction (19) and the electric centre being caused by the power transfer;
a controlled relative movement of the device (10; 20) with respect to the testing device (50; 60; 70; 80);
a performance analysis of the power transfer and the controllable magnetic interaction (19); and
a performance analysis of the power transfer and the controllable magnetic interaction (19) upon the testing device (50, 60; 70; 80) comprising an (electro)magnet arrangement (54; 64; 74; 84) arranged at the second wireless power transfer coil (52; 62; 72; 82).

22. A method (200) for testing wireless power transfer between a device (10; 20) for wireless power transfer and a testing device (50; 60; 70; 80), the device (10; 20) comprising a wireless power transfer coil (12; 22) and an electromagnet arrangement (14; 24) arranged at the wireless power transfer coil (12; 22), the testing device (50; 60; 70; 80) comprising a second wireless power transfer coil (52; 62; 72; 82), wherein the method (200) involves:
subjecting (210) the device (10; 20) to one or more test cases comprising wireless power transfer between the wireless power transfer coil (12; 22) and the second wireless power transfer coil (52; 62; 72; 82),
wherein at least one of the one or more test cases involves a controllable magnetic interaction (19) between the device (10; 20) and the testing device (50; 60; 70; 80) by means of the electromagnet arrangement (14; 24).
